# DEMANDE DE BREVET EUROPEEN

(11) **EP 2 042 389 A1**
(43) Date de publication de la demande: **01.04.2009**
(21) Numéro de dépôt: 08164595.4
(22) Date de dépôt: 18.09.2008
(51) Int. Cl.: B60R 21/34, B60R 21/0134, B60Q 1/08

(54) **Système de protection des piétons en cas de choc contre un véhicule**

(30) Priorité: 28.09.2007 FR 0706851
(71) Demandeur: Valeo Vision, 93012 Bobigny Cedex (FR)
(72) Inventeur: Nunez-Bootello, Juan-Pablo, 41007 Sevilla (ES); Arlon, Philippe, 77330 Ozoir la Ferriere (FR)

(57) **Abrégé**

L'invention concerne un système de protection de piétons pour véhicule automobile, comportant :
- au moins un projecteur (9) comprenant un module d'éclairage (3) et une commande de déplacement (7) dudit module d'éclairage,
- au moins un détecteur d'obstacle (8) apte à détecter la présence d'un obstacle à l'avant du véhicule, et
- un moyen de connexion apte à relier le détecteur d'obstacle (8) à la commande de déplacement (7) du module d'éclairage.

Selon l'invention, la commande de déplacement (7) du module d'éclairage comprend un système DBL apte à déplacer le module d'éclairage latéralement et/ou un système de compensation apte à déplacer le module d'éclairage verticalement.

## Description

L'invention concerne un système pour protéger les piétons en cas de choc entre un piéton et un véhicule automobile. L'invention permet de protéger le piéton, lors d'une collision du piéton contre un projecteur du véhicule, en déplaçant le point dur constitué par la lentille du projecteur afin que ce point dur ne soit pas directement sur la trajectoire d'impact du piéton.

L'invention trouve des applications dans le domaine de l'automobile. Elle trouve, en particulier, des applications dans le domaine de la protection de piétons, en cas de choc d'un piéton contre un véhicule automobile, répondant à la norme européenne concernant la sécurité des piétons.

En effet, il existe, dans le domaine de l'automobile des normes, par exemple une norme européenne et une norme japonaise, visant à protéger le piéton en cas de choc du piéton contre un véhicule. Ces normes définissent des points d'impact sur le véhicule en général, et sur les projecteurs en particulier, qui sont considérés comme des « points durs » lors d'un choc du véhicule avec un piéton. En effet, lors d'un choc entre un piéton et un véhicule automobile, appelé par la suite « choc piéton », un des éléments dangereux du véhicule avec lequel le piéton entre en contact peut être constitué par un projecteur, notamment lorsque ce dernier est du type elliptique.

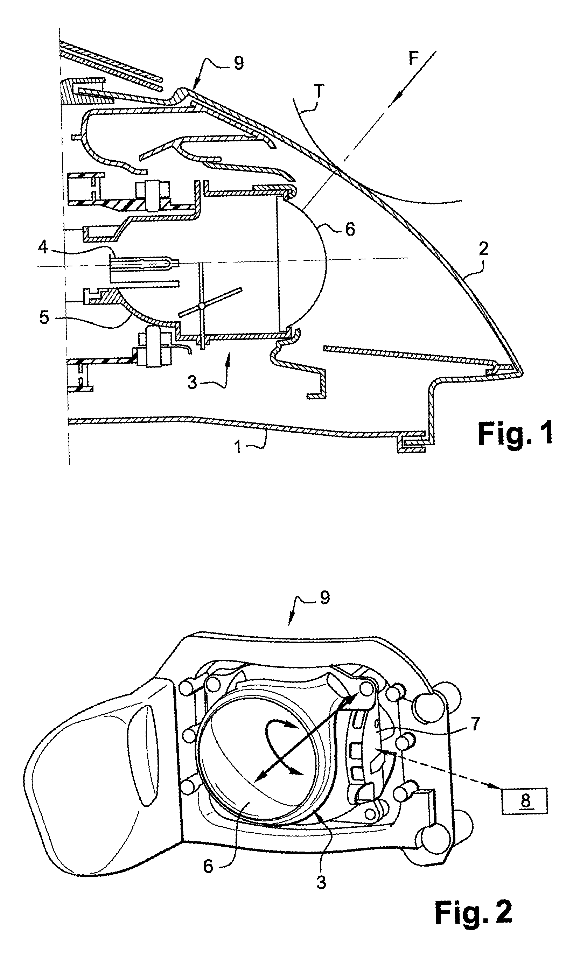

Comme représenté sur la figure 1, un projecteur 9 de véhicule automobile est constitué généralement d'un boîtier 1 fermé par une glace de protection 2. Le projecteur comporte, à l'intérieur du boîtier, un module d'éclairage 3, par exemple un module elliptique, comportant notamment une source lumineuse 4, un réflecteur 5 apte à réfléchir la lumière vers la glace de protection et une lentille 6 apte à diffuser la lumière. Pour des raisons optiques, cette lentille 6 est généralement réalisée en verre. La lentille en verre est un élément rigide potentiellement très dangereux pour le piéton et, en particulier, pour la tête ou la hanche du piéton, en cas de choc. Elle constitue ainsi un point dur dans le projecteur. On a représenté symboliquement sur la figure 1 par un arc de cercle T la tête ou la hanche d'un piéton heurtant, avec une force F, le projecteur du véhicule. La trajectoire d'impact entre le piéton et le projecteur est représentée en pointillés. Cette trajectoire montre que, en cas de choc d'un piéton contre un projecteur, le premier élément rencontré par le piéton est la glace de protection 2 puis, lorsque la glace de protection est brisée, la lentille 6 du module d'éclairage 3. Il peut également se produire que la glace 2 ne se brise pas, mais qu'elle fléchisse suffisamment pour venir au contact de la lentille 6, qui constitue aussi dans ce cas un point dur.

Or, lors d'un choc piéton, tous les éléments que le piéton va heurter peuvent être responsables de lésions et/ou de troubles pour le piéton. Pour limiter ces lésions et/ou ces troubles, et ainsi protéger le piéton, les constructeurs automobiles, pour se conformer aux normes, cherchent à absorber au maximum l'énergie produite par le choc. Pour cela, il faut qu'un maximum des éléments heurtés par le piéton soit apte à se déformer ou à se casser. En effet, en se déformant ou en se cassant, un élément absorbe une partie de l'énergie provenant du choc, ce qui réduit d'autant l'effet du choc sur le piéton. Par exemple, dans la plupart des projecteurs actuels, la glace de protection est prévue pour se briser, en cas de choc, de façon à absorber une partie de l'énergie due au choc.

Par ailleurs, l'espace situé dans le boîtier entre la glace de protection et le module d'éclairage permet également d'absorber de l'énergie.

Par contre, le module d'éclairage 3 est un dispositif relativement dur. Certains modules sont prévus pour se casser, à leur base, lors d'un choc et ainsi absorber de l'énergie. Cependant, la lentille 6, réalisée dans un bloc de verre épais, est particulièrement solide et indéformable. Elle ne peut absorber aucune énergie lors du choc. Elle constitue un point dur dans le projecteur, ce point dur étant très dangereux pour le piéton accidenté. En effet, en se heurtant à cet élément particulièrement rigide et indéformable qu'est la lentille 6, c'est le piéton qui absorbe l'énergie produite par le choc.

Pour améliorer la sécurité du piéton en cas d'impact avec un véhicule, une norme a été établie, qui définit différents critères auxquels un projecteur doit répondre pour être homologué. Succinctement, on peut dire que cette norme considère plusieurs types de piétons (enfant ou adulte) et plusieurs zones d'impact du piéton (tête, hanche, jambe) et qu'elle précise, pour chaque type de piéton et chaque zone d'impact, l'énergie maximale recevable par le piéton. Pour vérifier la conformité à cette norme, des tests de chocs sont effectués sur les projecteurs. Par exemple, lors de l'un de ces tests, on assimile la tête d'un enfant à une sphère de 3,5 kg lancée à 40 km/h.

On comprend alors l'importance du point dur constitué par la lentille du module d'éclairage dans le projecteur.

Pour minimiser les conséquences d'un choc piéton, plusieurs systèmes de protection ont déjà été mis en place par des constructeurs automobiles. Ces systèmes consistent, généralement, à éviter que le piéton n'atteigne des points durs, et notamment le point dur formé par la lentille du projecteur.

Un de ces systèmes consiste à déclencher l'ouverture du capot du véhicule lorsqu'un obstacle a été détecté. Par exemple, lorsqu'un obstacle est détecté, un cliquet de retenue du capot est lâché afin que le capot du véhicule s'ouvre. L'ouverture du capot permet au piéton de heurter des éléments plus déformables, et susceptibles d'absorber une partie de l'énergie du choc. Dans ce système, la détection de l'obstacle est réalisée au moyen d'un détecteur d'obstacle placé généralement à l'avant du véhicule et apte à détecter la présence d'un obstacle à proximité du véhicule. Lorsqu'un obstacle à été détecté comme ne pouvant pas être évité par le véhicule, alors le système de protection déclenche l'ouverture du capot. Cependant, en cas d'erreur de détection, par exemple si un obstacle à été détecté alors qu'il a été évité par le véhicule ou bien si l'obstacle n'était pas perturbant pour la circulation du véhicule, le conducteur du véhicule est obligé de s'arrêter au bord de la route pour refermer le capot. Il doit ensuite amener son véhicule chez un professionnel pour remplacer le système de protection. Ainsi, dans le cas d'une erreur de détection, ce système induit une non-visibilité de la route, par le conducteur, le temps que celui-ci arrête son véhicule pour refermer le capot, ce qui conduit à un problème de sécurité pour le conducteur.

Un autre système de protection des piétons consiste en un coussin autogonflable, appelé par la suite airbag, apte à s'ouvrir en extérieur du véhicule lorsqu'un obstacle à été détecté. Avec ce système, lorsqu'un obstacle à été détecté, des moyens d'explosion, par exemple des boulons pyrotechniques, permettent de déclencher l'airbag de façon à ce que l'avant du véhicule soit enveloppé de cet airbag. L'airbag ainsi déployé a pour effet d'amortir le choc du piéton sur le véhicule. Ce système a le désavantage d'être irréversible. En effet, lorsque les boulons pyrotechniques ont été déclenchés et que l'airbag a été déployé, le conducteur doit nécessairement être dépanné par un professionnel afin de remplacer ces boulons et replier l'airbag. On comprend donc que, comme avec le système précédent, dans le cas d'une erreur de détection d'obstacle, la sortie de l'airbag présente un inconvénient majeur pour le conducteur qui n'a plus aucune visibilité et doit arrêter son véhicule au plus vite.

D'autres systèmes de protection prévoient d'« effacer » le projecteur dans son ensemble de la trajectoire de l'obstacle. Ainsi, le document DE 102 57 267 par exemple décrit un projecteur dont le boîtier est maintenu en position par un doigt à l'extrémité du piston d'un cylindre hydraulique, à l'encontre de l'action d'un ressort de torsion. Lorsqu'un heurt est imminent, le doigt se rétracte, laissant le projecteur disparaître vers le bas derrière la carrosserie.

De même, le document DE 100 21 142 décrit un projecteur, qui peut être rétracté à l'intérieur du compartiment moteur, sous l'action d'un détecteur de pré-crash, par un piston d'un cylindre pyrotechnique. Ces deux documents imposent donc l'installation d'actionneurs spécifiques pour commander le mouvement du projecteur dans son ensemble, cette installation ne pouvant être effectuée qu'après avoir résolu des problèmes d'encombrement de ces actionneurs spécifiques, de leur intégration dans un environnement imposant de nombreuses contraintes, par exemple thermiques, ces actionneurs spécifiques ayant par ailleurs un coût non négligeable.

De plus, ces actionneurs spécifiques sont irréversibles, c'est-à-dire qu'ils doivent être remplacés après chaque déclenchement consécutif à une alerte pré-crash, et en particulier après de fausses alertes.

L'invention a justement pour but de remédier aux inconvénients des systèmes décrits précédemment. A cette fin, l'invention propose un système de protection des piétons dans lequel le module d'éclairage du projecteur est déplacé à l'aide d'actionneurs déjà existants dans le projecteur de façon à ce que le piéton ne heurte pas directement la lentille dudit module. En déplaçant la lentille, cela permet d'augmenter l'espace entre la glace de protection et les autres éléments du module, cet espace pouvant absorber une partie de l'énergie du choc. Cela permet surtout d'éviter que le piéton ne heurte de pleine face la lentille.

Pour cela, l'invention propose un système comportant un détecteur d'obstacle relié à des commandes de déplacement du module d'éclairage, telles qu'un système DBL et/ou un système de correction.

De façon plus précise, l'invention concerne un système de protection de piétons pour véhicule automobile, le véhicule comportant :
- au moins un projecteur comprenant un module d'éclairage et une commande de déplacement dudit module d'éclairage,
- au moins un détecteur d'obstacle apte à détecter la présence d'un obstacle à l'avant du véhicule, et
- un moyen de connexion apte à relier le détecteur d'obstacle à la commande de déplacement du module d'éclairage.

Selon l'invention, de déplacement du module d'éclairage comprend un système DBL apte à déplacer le module d'éclairage latéralement et/ou un système de compensation apte à déplacer le module d'éclairage verticalement.

L'invention peut comporter également une ou plusieurs des caractéristiques suivantes :
- le détecteur d'obstacle est détecteur télémétrique.
- le détecteur d'obstacle est un détecteur laser.
- les moyens de connexion sont aptes à alimenter électriquement la commande de déplacement du module d'éclairage dès que le véhicule est en marche.
- le détecteur d'obstacle est monté à l'intérieur du projecteur.

L'invention concerne également un projecteur de type elliptique pour véhicule automobile, comportant :
- un boîtier apte à être fixé sur le véhicule,
- une glace de protection fermant le boîtier,
- un module d'éclairage installé dans le boîtier et apte à projecteur un faisceau lumineux,
- une commande de déplacement du module d'éclairage,
caractérisé en ce qu'il comporte en outre un détecteur d'obstacle relié, par des moyens de connexion, à la commande de déplacement du module d'éclairage, et en ce que la commande de déplacement du module d'éclairage comprend un système DBL apte à déplacer le module d'éclairage latéralement et/ou un système de compensation apte à déplacer le module d'éclairage verticalement.

L'invention concerne aussi procédé de protection d'un piéton lors d'un choc du piéton contre un projecteur de véhicule automobile, caractérisé en ce qu'il comporte les opérations suivantes :
- recherche, dans une zone de détection, d'un piéton,
- confirmation de présence du piéton dans la zone de détection,
- transmission d'une information de choc à une commande de déplacement des modules d'éclairage du projecteur,
- déplacement des modules d'éclairage latéralement et/ou verticalement.

L'invention concerne également un véhicule automobile caractérisé en ce qu'il comporte un système de protection des piétons tel que décrit précédemment.

L'invention sera mieux comprise à la lecture de la description qui suit et à l'examen des figures qui l'accompagnent, présentées à titre indicatif et nullement limitatif de l'invention.

La figure 1, déjà décrite, représente une vue en coupe d'un projecteur de type elliptique classique.

La figure 2 représente schématiquement un projecteur dans le système de l'invention.

Les figures 3A et 3B représentent schématiquement un premier exemple d'impact d'une tête d'enfant sur un projecteur de véhicule équipé, respectivement, d'un projecteur classique et du système selon l'invention.

Les figures 4A et 4B représentent schématiquement un second exemple d'impact d'une tête d'enfant sur un projecteur de véhicule équipé, respectivement, d'un projecteur classique et du système selon l'invention.

La figure 5 représente des courbes d'effort d'un choc piéton dans le cas d'un véhicule équipé d'un projecteur classique et dans le cas d'un véhicule équipé du système de l'invention.

La figure 6 représente schématiquement les différentes phases de détection et de protection d'un piéton.

L'invention concerne un système de protection du piéton, en cas de choc piéton, dans lequel le module d'éclairage du projecteur est déplacé lorsqu'un piéton est détecté.

La plupart des projecteurs actuels sont équipés de dispositifs permettant d'améliorer l'éclairage de la route. Certains de ces dispositifs déplacent latéralement le module d'éclairage du projecteur afin d'éclairer la route dans les virages. Ces dispositifs, appelés systèmes DBL (Dynamic Bending Light, en termes anglo-saxons) permettent de suivre la trajectoire du véhicule, notamment dans les virages. Un système DBL permet de modifier l'orientation d'un faisceau lumineux produit par la source lumineuse de chaque projecteur de sorte que la route soit éclairée de façon optimale lorsqu'un véhicule aborde un virage. Par exemple, lorsque le véhicule aborde un virage à droite, l'éclairage est dévié vers la droite de la route. Lorsqu'un véhicule aborde un virage à gauche, l'éclairage du véhicule est dévié vers la gauche de la route. Un tel système DBL constitue une commande de déplacement latéral du module d'éclairage.

D'autres de ces dispositifs déplacent le module d'éclairage du projecteur verticalement. Ces dispositifs, appelés correcteurs ou systèmes de compensation, modifient l'éclairage en fonction de l'assiette du véhicule. Autrement dit, lorsque le véhicule n'est pas parallèle à la route, le faisceau lumineux peut être orienté pour augmenter ou réduire sa portée lumineuse, et ainsi éviter les éblouissements. En particulier, lorsque le véhicule «pique du nez », c'est-à-dire que l'avant du véhicule est dirigé vers la route, par exemple en cas de freinage, alors l'éclairage du véhicule est dévié vers le haut pour augmenter la portée lumineuse. Au contraire, lorsque le véhicule «lève le nez », c'est-à-dire que l'arrière du véhicule est dirigé vers la route, par exemple en cas de charge trop importante à l'arrière du véhicule, alors l'éclairage du véhicule est dévié vers le bas pour diminuer la portée lumineuse. Un tel système de compensation constitue une commande de déplacement vertical du module d'éclairage.

Un système DBL, comme un système de compensation, comporte un moteur apte à déplacer chacun des modules d'éclairage, respectivement, latéralement ou verticalement. L'invention propose d'utiliser le système DBL et/ou le système de compensation du véhicule, et notamment le moteur de ces systèmes, pour déplacer les modules d'éclairage en cas de choc piéton. Sur la figure 2, on a représenté un exemple de système de protection selon l'invention. Le système de l'invention comporte un projecteur 9 ainsi qu'un détecteur d'obstacle 8. Le projecteur 9 comprend un module d'éclairage 3 apte à être déplacé à partir d'une commande de déplacement 7. Le détecteur d'obstacle 8 est apte à détecter la présence d'un piéton et à transmettre une information relative à la présence du piéton à la commande de déplacement 7 du module d'éclairage. La commande de déplacement 7 du module peut être soit un système DBL, soit un système de compensation, soit deux systèmes DBL et de compensation associés l'un avec l'autre, soit tout autre système permettant de déplacer un module d'éclairage à l'intérieur d'un projecteur.

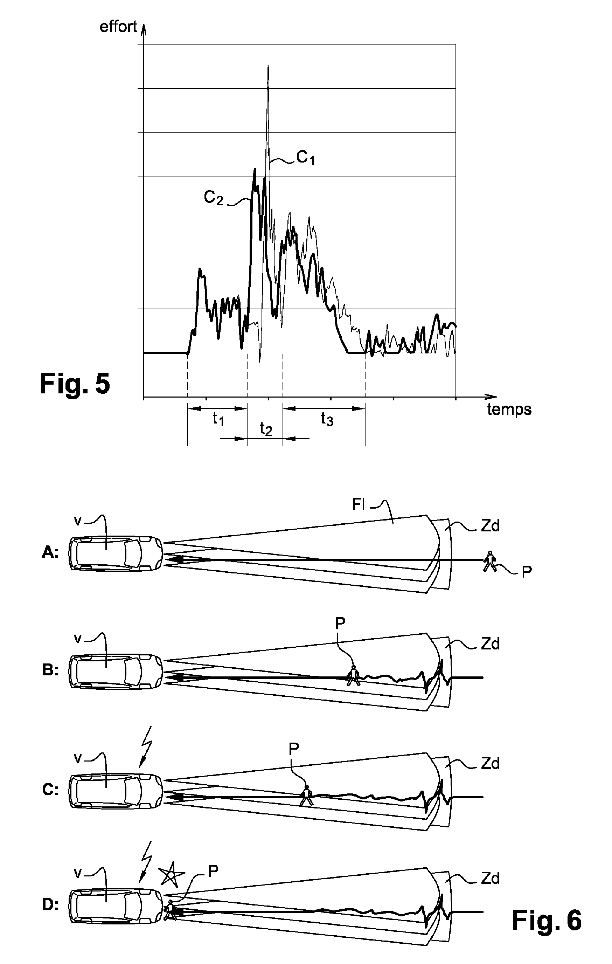

Sur la figure 6, on a représenté schématiquement différentes étapes de la détection et de la protection d'un piéton lors d'un choc entre un piéton et un véhicule équipé du système de l'invention. Sue cette figure 6, on a représenté un véhicule V se déplaçant sur une route en éclairant cette route au moyen d'un faisceau lumineux FI et en émettant un faisceau de détection d'obstacles dans une zone Zd.

Dans la partie A de la figure 6, on considère que le véhicule avance sur une route et qu'il n'y a aucun piéton détecté par le véhicule. En effet, dans cette partie A, le piéton P est situé en extérieur du faisceau lumineux FI et de la zone Zd de détection d'obstacle.

Dans la partie B, le véhicule V a avancé, et/ou le piéton P a avancé, de sorte que le piéton se trouve dans la zone de détection Zd. Cette partie B représente l'étape de recherche (tracking, en termes anglo-saxons) de l'obstacle, en particulier du piéton. Le piéton P est alors détecté par le système de l'invention.

Dans l'étape C de la figure 6, le système de l'invention détecte si le piéton P reste dans la zone de détection Zd. En effet, si le véhicule continue à avancer vers le piéton et que le piéton reste dans la zone Zd, alors le système de l'invention détermine que le piéton est proche du véhicule et qu'il risque d'y avoir un choc. Dans ce cas, le détecteur d'obstacle transmet une information de choc à une commande de déplacement du module d'éclairage. Si, au contraire, à cette étape C, le système détecte que le piéton a disparu de la zone Zd, alors le procédé de protection s'arrête et le système continue à détecter la présence d'éventuels autres piétons dans la zone Zd.

Dans la partie D de la figure 6, la présence du piéton dans la zone Zd est confirmée. Le piéton est à proximité du véhicule. L'éminence d'un choc à été détectée et signalée à la commande de déplacement. La commande d'éclairage déplace chacun des modules d'éclairage latéralement et/ou verticalement afin d'éviter un impact direct entre le piéton et la lentille du module d'éclairage.

On comprend de ce qui précède qu'il est important de pouvoir détecter le piéton suffisamment loin pour que le système puisse transmettre l'information de choc aux commandes de déplacement et que ces commandes de déplacement aient le temps de faire déplacer les modules. Le temps de réaction entre la détection du piéton et le déplacement des modules optiques est de l'ordre de quelques centièmes à quelques dixièmes de secondes. On comprend aussi qu'il est préférable que le piéton ne soit pas non plus détecté trop tôt car, plus il est détecté tôt et plus il a des chances d'être sorti de la zone de détection Zd lorsque le véhicule passe à sa hauteur, ce qui entraînerait des détections intempestives. En effet, si l'information de choc est donnée trop tôt aux commandes de déplacement des modules, alors il y a des possibilités que le piéton ait pu sortir de la zone d'impact lorsque le véhicule arrive à sa hauteur, par exemple en sautant sur le coté ou en courant. Pour éviter une détection intempestive, on choisit de détecter les piétons à partir une certaine distance schématisée, sur la figure 6, par la zone Zd et de confirmer leur présence dans cette même zone un instant plus tard.

Il est entendu que la distance de détection, correspondant à la zone Zd, peut être modifiée en fonction de critères choisis par le constructeur automobile. Dans l'exemple de la figure 6, on choisit, comme distance de détection, une distance correspondant approximativement à la longueur du faisceau lumineux FI.

Comme expliqué précédemment, le système de l'invention comporte un détecteur d'obstacle. Ce détecteur d'obstacle, appelé aussi capteur de pre-crash, peut être de différents types. Ce peut être un détecteur laser ou bien un détecteur optique ou encore un détecteur télémétrique.

Dans un mode de réalisation préféré de l'invention, le détecteur est télémétrique ; il mesure la distance entre le véhicule et l'obstacle. Comme le calculateur de bord du véhicule est apte à déterminer la vitesse du véhicule, il est capable, à partir de l'information de distance fournie par le détecteur télémétrique, de calculer une durée restant avant l'impact (c'est-à-dire une estimation du temps écoulé entre la mesure de la distance et l'instant du choc). Par ailleurs, le calculateur de bord du véhicule connaît la puissance de freinage du véhicule. Il peut donc déterminer si la durée restant avant l'impact est inférieure à la durée de freinage, compte tenu de la vitesse du véhicule, et en déduire si un choc piéton risque de se produire. La détection d'obstacle est alors obtenue par une mesure télémétrique associée à des calculs par le calculateur de bord du véhicule.

Un tel détecteur télémétrique a l'avantage de pouvoir être de petite taille. Il peut donc être intégré facilement sur le véhicule. En particulier, il peut être intégré à l'intérieur du projecteur. L'intégration d'un tel système à l'intérieur du projecteur permet de minimiser le temps de transmission de l'information entre le détecteur et la commande de déplacement.

Certains véhicules actuels intègrent déjà un détecteur d'obstacle utilisé, par exemple, pour une protection des piétons par ouverture du capot du véhicule ou par déploiement d'un airbag. Lorsque le véhicule comporte déjà un détecteur d'obstacle, l'invention propose de récupérer l'information fournie par ce détecteur d'obstacle et de la transmettre à la commande du système DBL et/ou du système de compensation.

Quel que soit le détecteur d'obstacle choisi, celui-ci est relié à la commande de déplacement du module d'éclairage par des moyens de connexion. Ces moyens de connexion comportent une liaison filaire ou une liaison sans fil. Lorsque le module d'éclairage est commandé à la fois par le système de compensation et par le système DBL, alors le détecteur est relié soit aux deux systèmes soit à une unité de commande générale du déplacement du module d'éclairage.

Quel que soit le type de commande de déplacement (système DBL et/ou système de compensation), il est possible d'établir une stratégie de déplacement des modules d'éclairage. Cette stratégie prend en compte les conséquences liées à chacun des points d'impact possibles, ces points d'impact et leurs conséquences étant généralement connus des constructeurs automobiles. Cette stratégie consiste à choisir un déplacement de chaque module d'éclairage vers la droite, vers la gauche, vers le haut ou vers le bas, en fonction des points d'impact d'origine, afin de diminuer l'effort de choc sur le piéton.

Un exemple général de stratégie préventive consisterait à faire pivoter le module DBL vers l'extérieur du véhicule, pour faire sortir la lentille de la zone d'impact définie par la norme, et vers le bas, pour éloigner la lentille de la glace.

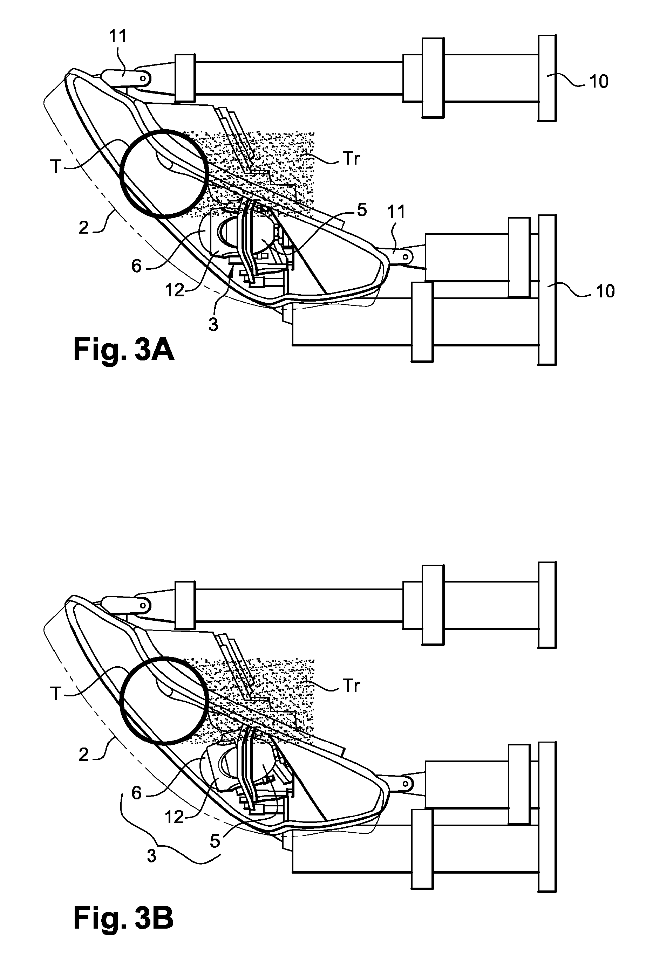

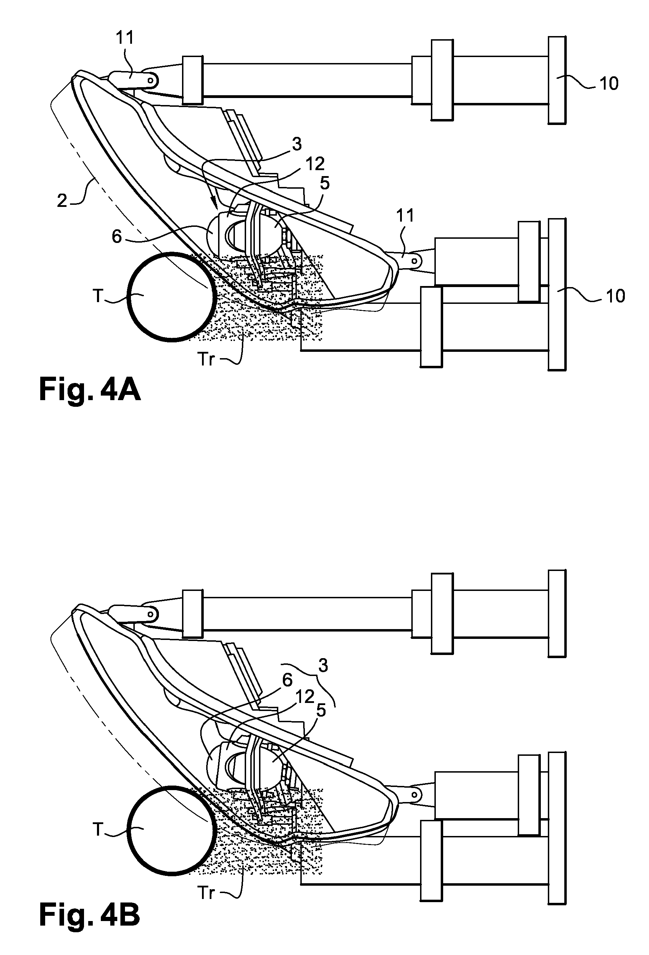

Des exemples de stratégie sont illustrés sur les figures 3A, 3B, 4A et 4B. Les figures 3A et 4A montrent deux exemples d'impact sur un véhicule équipé de projecteurs classiques. Les figures 3B et 4B montrent ces deux mêmes exemples d'impact lorsque le véhicule est équipé du système de protection de l'invention.

Sur ces quatre figures, le piéton est symbolisé par une sphère T, qui correspond, lors des tests, à une tête d'enfant ou à une hanche d'adulte. Le projecteur, sur ces figures, est fixé au moyen de pattes de fixations 11 sur un support de test 10. le projecteur comporte une glace de protection 2 et un module d'éclairage 3. Le module d'éclairage comporte le réflecteur 5 et la lentille 6, maintenus ensemble par une pièce intermédiaire 12. Sur ces figures, la glace de protection 2 est représentée en hachurés car, à ce stade du choc, elle est brisée. La tête T est déjà dans le boîtier du projecteur.

Dans l'exemple de la figure 3A, le module d'éclairage est placé droit, face à la route. La tête T va heurter le projecteur dans la zone supérieure dudit projecteur. La trajectoire Tr de la tête T est représentée en mouchetés, à l'avant de la tête T. On voit, d'après cette trajectoire Tr, que la tête T va heurter directement le bord supérieur de la lentille 6 qui, à cet endroit, est maintenue rigidement sur la pièce intermédiaire 12.

Sur la figure 3B, on a représenté le même choc et le même module d'éclairage que sur la figure 3A, mais dans le cas où le véhicule est équipé du système de l'invention. Dans ce cas, comme un choc piéton a été détecté, le module d'éclairage à été déplacé vers le bas. On voit, sur cette figure 3B, que le module d'éclairage est dirigé au maximum vers le bas. Comme on le voit, d'après la trajectoire Tr, la tête T va heurter plus loin le module d'éclairage, à un endroit où il n'y a pas la lentille. L'énergie du choc, à cet emplacement, sera moins élevée. Elle le sera d'autant moins que les matériaux de la pièce intermédiaire 12 et du réflecteur 5 sont déformables ou cassables.

Sur les figures 4A et 4B, on a représenté un autre exemple de choc, dans des conditions similaires à celles des figures 3A et 3B. Dans ces exemples, la tête T va heurter le projecteur dans le bas dudit projecteur. Sur la figure 4A, on voit, d'après la trajectoire Tr, que la tête T va heurter directement le bord inférieur de la lentille 6 qui, à cet endroit, est maintenue rigidement sur la pièce intermédiaire.

Sur la figure 4B, on voit que, avec le système de l'invention, le module d'éclairage à été déplacé au maximum vers le haut, ce qui permet à la tête T de heurter, non pas la lentille 6, mais les éléments arrière du module d'éclairage qui, eux, sont susceptibles d'absorber une partie de l'énergie du choc.

La figure 5 représente deux exemples de courbes d'effort obtenues lors de l'impact d'une sphère représentant une tête d'enfant ou une hanche d'adulte sur un projecteur. La courbe C1 montre l'effort du choc sur un projecteur classique. La courbe C2 montre l'effort du choc sur un projecteur dont le module d'éclairage est déplacé grâce au système de l'invention. Les deux courbes comportent chacune une série de petits pics d'effort, pendant le temps t1. Cette série de petits pics correspond à la rupture de la glace de protection.

La courbe C1 comporte ensuite un important pic d'effort, pendant t2, qui correspond à l'impact de la sphère sur la lentille du module d'éclairage. La courbe C2 comporte, pendant t2, une série de pics moyens qui correspond à l'impact de la sphère sur le module d'éclairage. Sur cette courbe C2, il n'y a pas un grand pic, ce qui signifie que l'effort de l'impact, après la rupture de la glace de protection, reste moyen tout au long de t2. La sphère ne subit donc pas d'impact avec un point dur. Pendant le temps t3, les courbes C1 et C2 sont approximativement identiques.

On comprend ainsi, qu'avec le système de l'invention, le piéton subit des pics d'effort beaucoup plus réguliers, plus moyens, qu'avec un projecteur classique. En outre, les pics d'efforts se trouvent déplacés, ce qui peut permettre de retarder l'instant de l'impact. Le piéton est ainsi protégé d'un impact particulièrement violent.

On comprend, de ce qui précède, que quel que soit l'endroit où la tête piéton va heurter, la lentille constituant le point dur du module d'éclairage peut être déplacée, de façon à ce que ladite tête piéton ne heurte pas la lentille directement, de pleine face.

Le système de l'invention est apte à fonctionner aussi bien de nuit, avec les projecteurs allumés, que de jour lorsque les projecteurs sont éteints. De nuit, les systèmes DBL et de compensation sont alimentés électriquement dès que les projecteurs sont mis en fonctionnement. De jour, si les projecteurs ne sont pas en fonctionnement, l'invention prévoit d'alimenter le système DBL et/ou le système de compensation en permanence. Dans ce cas, les moyens de connexion comportent une fonction de mise sous tension de la commande de déplacement dès le démarrage du véhicule. La commande de déplacement des modules d'éclairage est alors alimentée même quant les projecteurs sont éteints. Elle peut donc recevoir les informations provenant du détecteur d'obstacle et commander le déplacement des modules en fonction de cette information. Dans les pays où l'éclairage de jour est obligatoire (au moyen d'un système DRL), l'invention prévoit de coupler la commande de déplacement au système d'éclairage DRL, ce qui permet à la commande de déplacement d'être alimentée en permanence. Dans ce cas, les moyens de connexion incluent cette fonction de couplage.

Le système de l'invention tel qu'il vient d'être décrit est réalisé de façon à éviter des erreurs de détection de piéton. Toutefois, si une détection de piéton est erronée, le déplacement des modules d'éclairage lié à cette détection n'a que peu de conséquences sur la conduite du conducteur. En effet, si un piéton a été détecté par erreur, le système DBL et/ou le système de compensation va/vont entraîner uniquement un éclairage anarchique de la route pendant quelques instants. Après une erreur de détection, le système DBL et/ou le système de compensation redressent les modules d'éclairage naturellement, sans aucune intervention extérieure, et les remettent dans la position dans laquelle ils devraient être. Le conducteur n'a donc ni besoin d'arrêter son véhicule, ni besoin de faire appel à un spécialiste.

En outre, si une détection erronée a lieu de jour, cette erreur n'a aucun effet puisque les projecteurs sont éteints et qu'ils n'éclairent pas la route.

On comprend donc que le système de protection des piétons selon l'invention est réversible, en cas d'erreur de détection.

## Revendications

1. Système de protection de piétons pour véhicule automobile, le véhicule comportant :
- au moins un projecteur (9) comprenant un module d'éclairage (3) et une commande de déplacement (7) dudit module d'éclairage,
- au moins un détecteur d'obstacle (8) apte à détecter la présence d'un obstacle à l'avant du véhicule, et
- un moyen de connexion apte à relier le détecteur d'obstacle (8) à la commande de déplacement (7) du module d'éclairage,
**caractérisé en ce que** la commande de déplacement (7) du module d'éclairage comprend un système DBL apte à déplacer le module d'éclairage latéralement et/ou un système de compensation apte à déplacer le module d'éclairage verticalement.

2. Système selon la revendication 1, **caractérisé en ce que** le détecteur d'obstacle (8) est détecteur télémétrique.

3. Système selon la revendication 1, **caractérisé en ce que** le détecteur d'obstacle (8) est un détecteur laser.

4. Système selon l'une quelconque des revendications 1 à 3, **caractérisé en ce que** les moyens de connexion sont aptes à alimenter électriquement la commande de déplacement du module d'éclairage dès que le véhicule est en marche.

5. Système selon l'une quelconque des revendications 1 à 4, **caractérisé en ce que** le détecteur d'obstacle (8) est monté à l'intérieur du projecteur (9).

6. Projecteur de type elliptique pour véhicule automobile, comportant :
- un boîtier (1) apte à être fixé sur le véhicule,
- une glace de protection (2) fermant le boîtier,
- un module d'éclairage (3) installé dans le boîtier et apte à projeter un faisceau lumineux,
- une commande de déplacement (7) du module d'éclairage,
**caractérisé en ce qu'**il comporte en outre un détecteur d'obstacle (8) relié, par des moyens de connexion, à la commande de déplacement (7) du module d'éclairage, et **en ce que** la commande de déplacement (7) du module d'éclairage comprend un système DBL apte à déplacer le module d'éclairage latéralement et/ou un système de compensation apte à déplacer le module d'éclairage verticalement.

7. Procédé de protection d'un piéton lors d'un choc du piéton contre un projecteur de véhicule automobile, **caractérisé en ce qu'**il comporte les opérations suivantes :
- recherche, dans une zone de détection (Zd), d'un piéton (P),
- confirmation de présence du piéton (P) dans la zone de détection (Zd),
- transmission d'une information de choc à une commande de déplacement (7) des modules d'éclairage (3) du projecteur,
- déplacement des modules d'éclairage (3) latéralement par un système DBL et/ou verticalement par un système de compensation.

8. Véhicule automobile, **caractérisé en ce qu'**il comporte un système de protection des piétons selon l'une quelconque des revendications 1 à 5.
